# EUROPÄISCHE PATENTSCHRIFT

(11) **EP 3 324 161 B1**
(45) Veröffentlichungstag und Bekanntmachung des Hinweises auf die Patenterteilung: **17.06.2020**
(21) Anmeldenummer: 16199476.9
(22) Anmeldetag: 18.11.2016
(51) Int. Cl.: G01J 3/26, G01J 3/36

(54) **SPEKTROMETER UND VERFAHREN ZUR JUSTIERUNG EINES FILTERARRAYS**
SPECTROMETER AND METHOD FOR ADJUSTING A FILTER ARRAY
SPECTROMÈTRE ET PROCÉDÉ DE RÉGLAGE D'UN EMPILEMENT DE FILTRES

(43) Veröffentlichungstag der Anmeldung: 23.05.2018
(73) Patentinhaber: Espros Photonics AG, 7320 Sargans (CH)
(72) Erfinder: DE COI, Beat, 7304 Maienfeld (CH)
(74) Vertreter: Otten, Roth, Dobler & Partner mbB Patentanwälte

(56) Entgegenhaltungen:
- EP-A2- 0 442 738
- DE-T5-112013 002 556
- US-A- 5 159 199
- US-A1- 2016 238 449

## Beschreibung

Die Erfindung betrifft ein Spektrometer zur Aufnahme eines Spektrums, insbesondere in einem Wellenlängenbereich von 250 nm bis 1150 nm sowie des Weiteren ein Verfahren zur Justierung eines Filterarrays in Bezug auf ein Sensorarray für ein Spektrometer bzw. zur Herstellung eines Spektrometers.

Aus dem Stand der Technik sind Spektrometer mit einem Sensorpixelarray und einem zugeordneten Filter bekannt. Die verwendeten Filter setzen sich zusammen aus einzelnen Filterpixeln, wobei z.B. Fabry-Perot-Interferometer zur Ausbildung eines Bandpassfilters verwendet werden.

Von der EP 0 442 738 A2 ist es bekannt, ein keilförmiges Interferenzfilter justierbar gegenüber einem Sensorpixelarray anzuordnen. 11

DE 11 2013 002556 T5 und US2016/238449 A1 offenbaren eine feste Zuordnung von Interferenzfilter-Pixeln zu Sensorpixeln und die Ausbildung eines Rasters bzw. einer Lochplatte, um ein Übersprechen zu verhindern.

Aufgabe der Erfindung ist es, ein Spektrometer bereitstellen zu können, dessen Herstellungskosten deutlich verringert sind. Die Aufgabe wird, ausgehend von einem Spektrometer bzw. einem Justierverfahren der eingangs genannten Art, durch die Merkmale der Ansprüche 1 bzw. 17 gelöst.

Durch die in den abhängigen Ansprüchen genannten Maßnahmen sind vorteilhafte Ausführungen und Weiterbildungen der Erfindung möglich.

Bei dem erfindungsgemäßen Spektrometer kann diese Aufgabe insbesondere dadurch gelöst werden, dass die Justierung zwischen dem Sensorarray und dem Filterarray wesentlich vereinfacht wird bzw. in der Herstellung geringere Kosten verursacht. Gleichzeitig wird bei dem erfindungsgemäßen Spektrometer bzw. dem erfindungsgemäßen Justierverfahren grundsätzlich keine Genauigkeit eingebüßt. Auf der Vorderseite des Spektrometers befindet sich ein Halbleiterchip, auf dem insbesondere die Elektronik zur Erfassung bzw. Verarbeitung der vom Sensorarray gelieferten detektierten Signale dient. Das Sensorarray wiederum, mit dem die zu empfangenden Lichtsignale detektiert werden können, ist zur rückseitigen Beleuchtung ausgebildet und insofern auf der Rückseite des Halbleiterchips angeordnet, sodass die Elektronik des Halbleiterchips von der Detektionsseite abgewandt ist und nicht abschattet. Dieses Sensorarray umfasst eine Matrixanordnung von wenigstens zwei Sensorpixeln. In der Regel sind jedoch deutlich mehr als zwei Sensorpixel vorhanden. Allgemein dienen die Sensorpixel der Detektion elektromagnetischer Strahlung, also insbesondere von Licht im oben angeführten Wellenlängenbereich zwischen 250 nm (Abkürzung: Nanometer) und 1150 nm. Dadurch, dass das Sensorarray zur rückseitigen Beleuchtung ausgebildet ist, steht meist in vorteilhafter Weise mehr Detektionsfläche zur Verfügung, da, wie bereits oben dargestellt, eine etwaige Auswerteelektronik den Detektionsbereich nicht abschattet. Darüber hinaus besitzt die Rückseitenbeleuchtung zusätzlich noch den Vorteil, dass keine Isolationsschicht verwendet werden muss, die in der Regel einen (wenn auch nur leicht) veränderten Brechungsindex aufweist und somit zu Reflexionen führen kann. Das einfallende und zu detektieren Licht kann gut absorbiert werden, da praktisch das gesamte Bulk-Material und somit eine vergleichsweise dicke Absorptionsschicht zur Verfügung steht; dies ist insbesondere auch von Vorteil, weil unterschiedliche Wellenlängen unterschiedliche Eindringtiefen ins Bulkmaterial aufweisen. Durch die Rückseitenbelichtung des Sensors wird über einen sehr weiten Wellenbereich eine sehr hohe Empfindlichkeit ermöglicht. Zudem verläuft die Empfindlichkeit in diesem Wellenbereich, insbesondere zwischen 250 nm bis 1150 nm, sehr homogen und praktisch ohne Modulation.

Ferner ist ein Filterarray zur Filterung der Strahlung in Abhängigkeit von der Wellenlänge vorgesehen, wobei das Filterarray eine Matrixanordnung von wenigstens zwei Filterpixeln umfasst. Jedes Filterpixel kann einem bestimmten Bereich auf dem Sensorarray zugeordnet sein, sodass Licht, welches ein entsprechendes Filterpixel passiert, auf diesen zugeordneten Bereich des Sensorarrays einfällt und dort von den entsprechenden Sensorpixeln detektiert wird. Jedes dieser Filterpixel zur Filterung bildet gewissermaßen ein Fabry-Perot-Interferometer aus. Ein Fabry-Perot-Interferometer umfasst z.B. zwei möglichst parallel angeordnete halbdurchlässige Spiegel oder Endabschnitte einer transparenten Platte. Das Licht kann somit durch das Interferometer direkt hindurchtreten, oder es wird zwischen den beiden halbdurchlässigen Spiegeln oder den Grenzflächen der entsprechenden Glasplatte reflektiert, legt also jeweils noch einmal die doppelte Entfernung zwischen den Spiegeln bzw. die doppelte Dicke der Glasplatte oder ein Vielfaches davon zurück. Hierdurch ergibt sich bei den interferierenden Strahlen ein Wegunterschied der somit, abhängig vom Abstand der halbdurchlässigen Spiegel bzw. der Dicke der Glasplatte zu dem entsprechenden Interferenzeffekt führt und wellenlängenabhängig das Licht durchlässt. Da eine rückseitige Beleuchtung vorgesehen ist, ist das Filterarray zur Rückseite des Sensorarrays hin angeordnet.

Um die Justage zwischen Filterarray und Sensorarray vereinfachen zu können, ist erfindungsgemäß eine Einrichtung zur Kennzeichnung der vom Filterarray überdeckten Sensorpixel mit einem nicht-flüchtigen Speicher vorgesehen, wobei in dem Speicher die Koordinaten des Filterarrays in Bezug auf das Sensorarray hinterlegt sind; statt der unmittelbaren Koordinaten kann auch eine Koordinatentransformation des Filterarrays in Bezug auf das Sensorarray dort hinterlegt sein. Anhand dieser Koordinaten bzw. dieser Koordinatentransformation können die Sensorpixel den einzelnen Filterpixeln zugeordnet werden. Ist ein Sensorpixel nicht von einem Filterpixel überdeckt, so findet entsprechend keine Zuordnung statt. Diese Information über die relative Positionierung von Sensorarray und Filterarray macht es obsolet, bei der Positionierung der beiden zueinander genau darauf zu achten, dass ein entsprechendes Filterpixel genau über den dafür vorgesehenen Sensorpixeln liegt. Einfacher ist es stattdessen, wenn bei der Anbringung des Filterarrays am Sensorarray es im Wesentlichen nicht darauf ankommt, wie genau das Filterarray gegenüber dem Sensor ausgerichtet ist, welche Sensorpixel im Einzelnen nun tatsächlich überdeckt werden und ob das Filterarray gegenüber dem Sensorarray verschoben oder verdreht platziert wird. Gerade die Justierung stellt, insbesondere bei der Herstellung derartiger Spektrometer, einen besonders teuren Verfahrensschritt dar, da sehr exakt und mit enormem technischen Aufwand das Filterpixel relativ zum Sensorarray justiert und bewegt werden muss. Erfindungsgemäß wird außerdem ermöglicht, dass das Sensorarray nicht für jedes Filter neu kalibriert werden muss.

Es gibt nun bei einer Weiterbildung der Erfindung die Möglichkeit, das Filterarray auf der Rückseite des Sensorarrays anzuordnen. Alternativ dazu kann das Filterarray auch auf einem transparenten Träger aufgebracht sein, wobei der transparente Träger auf der Rückseite des Sensorarrays wiederum angeordnet werden kann. Wird ein transparenter Träger weggelassen, so ist eine besonders genaue und kostengünstige Fertigung möglich, da das Filterarray unmittelbar in Bezug auf das Sensorarray bei der Herstellung positioniert wird. Außerdem kann das Filterarray auch auf einem transparenten Träger aufgebracht sein, wobei wiederum der transparente Träger auf der Rückseite des Sensorarrays angeordnet wird. Ein derartiges Ausführungsbeispiel hat den Vorteil, dass beide, Sensorarray und Filterarray, getrennt gefertigt werden können. Darüber hinaus ist das von der Rückseite zu beleuchtende Sensorarray in der Regel empfindlich zu behandeln, so dass eine unmittelbare, feste Verbindung mit einer Filterschicht Spannungen hervorrufen könnte und somit gegebenenfalls zur Zerstörung führt. Dies kann bei dem in Rede stehenden Ausführungsbeispiel der Erfindung dadurch vermieden werden, dass das Filterarray auf einem derartigen transparenten Träger gefertigt wird.

Bei der Weiterbildung der Erfindung kommt als transparenter Träger insbesondere eine Glasscheibe infrage, da ein solches Material mit den gewünschten optischen Eigenschaften, insbesondere mit einer hohen Transparenz, aber auch mit der notwendigen Stabilität für das Filter ausgestattet sein kann. Werden optische Bauteile wie Sensorarray und Filterarray getrennt voneinander produziert, so müssen sie später beim Zusammenbau des Spektrometers relativ zueinander justiert werden. Zur Handhabung des Filterarrays kann daher in vorteilhafter Weise ein transparenter Träger verwendet werden.

Grundsätzlich ermöglicht erfindungsgemäß die Einrichtung zur Kennzeichnung der vom Filterarray überdeckten Sensorpixel die Zuordnung, welche Filterpixel welche Sensorpixel überdecken, sodass den entsprechenden Sensorpixeln auch die herausgefilterte Wellenlänge zugeordnet werden kann. Erfindungsgemäß ist dies im Allgemeinen aber auch dann möglich, wenn Filterarray und Sensorarray zueinander verdreht sind, d.h. wenn Zeilen bzw. Spalten der jeweiligen Arrays nicht parallel zueinander verlaufen. Darüber hinaus muss beachtet werden, dass in den Randbereichen einzelner Filterpixel es zu Überdeckung des gefilterten Lichts kommen kann. Dies führt gegebenenfalls dazu, dass hier in den Randbereichen einzelner Filterpixel die Detektion nicht mit der entsprechenden Präzision ausgeführt werden kann, weil eine eindeutige Zuordnung einer Intensität zu einer bestimmten Wellenlänge nicht ohne Weiteres mehr möglich ist. Um dies zu vermeiden, wird eine Lochrasterblende verwendet. Eine solche Blende verhindert eine Detektion in den Randbereichen der einzelnen Filterpixel, in denen ohnehin Überlappungen mit Licht benachbarter Filterpixel zu erwarten sind. Die Lochrasterblende insgesamt definiert jedoch gleichzeitig einzelne Detektionsbereiche, die jeweils wenigstens ein Sensorpixel umfassen und sich einem speziellen Filterpixel zuordnen lassen, d.h. für die Detektion eines bestimmten Wellenlängenbereichs zuständig sind. Durch die Ausbildung einer derartigen Lochrasterblende kann gemäß der vorliegenden Erfindung die Genauigkeit der Messung erhöht werden.

Um die Lochrasterblende möglichst kostengünstig und ohne höheren Materialaufwand bzw. Fertigungsaufwand herstellen zu können, können einzelne Sensorpixel in den Randbereichen der Filterpixel inaktiviert werden, d.h. sie werden entweder von vornherein ausgeschaltet, oder ihr Messsignal wird nicht weiter berücksichtigt. Das Aufbringen oder Einarbeiten einer Lochrasterblende auf das Sensorarray oder auf bzw. in das Filterarray kann also vermieden werden, und Überlappungen durch die Anordnung benachbarter Filterpixel wird somit dennoch Rechnung getragen.

Umgekehrt ist es auch denkbar, dass bei der Ausführungsvariante der Erfindung durch die Einrichtung zur Kennzeichnung der vom Filterarray überdeckten Sensorpixel gerade die (oder einige der) Sensorpixel erst aktiviert werden, wenn sie in Überdeckung mit den jeweiligen Filterpixeln liegen und gegebenenfalls zusätzlich in den Bereich der Lochrasterblende fallen, der nicht aus inaktiven Pixeln bestehen soll, da diese zu sehr im Randbereich der einzelnen Filterpixel liegen und deshalb zu Ungenauigkeiten führen können. Es ist also auch möglich, die entsprechenden Sensorpixel so lange inaktiv zu lassen, bis diese entsprechend der Anordnung des Filterarray sich zuordnen lassen und diese dann erst zu aktivieren. Dadurch können Fehldetektionen bzw. Ungenauigkeiten vermieden werden. Durch diese Maßnahme kann gegebenenfalls auch der Energiebedarf des Spektrometers verringert werden, da gezielt nur bestimmte Sensorpixel aktiviert werden.

Zu diesem Zweck, Sensorpixel gemäß der Lage des Filterarrays aktivieren bzw. deaktivieren zu können, kann die Einrichtung zur Kennzeichnung der vom Filterarray überdeckten Sensorpixel gemäß einem Ausführungsbeispiel der Erfindung eine entsprechende Elektronikschaltung aufweisen. Hierdurch wird ermöglicht, dass automatisch beim Betrieb des Spektrometers die Zuordnung der Sensorpixel zum Filterarray durchgeführt wird. Dies kann gegebenenfalls auch allein auf der Datenverarbeitungsebene vorgenommen werden. Eine reine Auswahl der von einzelnen Sensorpixeln gelieferten Daten auf der Datenverarbeitungsebene besitzt den Vorteil, dass grundsätzlich mehr Messdaten zur Verfügung stehen. Diese müssen dann erst im Nachhinein ausgewertet werden. Sind zum Beispiel die im Randbereich der Filterpixel vorhandenen Messdaten interessant, so können diese noch verwendet werden. Zum Beispiel kann anhand dieser Daten auch ermittelt werden, wie breit der Rand einer Lochrasterblende gewählt werden soll. Die Elektronikschaltung kann auch dafür verantwortlich sein, einer Ausführungsform der Erfindung die Lochrasterblende dadurch auszubilden, dass sie Sensorpixel im Randbereich der jeweiligen Filterpixel inaktiviert.

Die Elektronikschaltung kann bei der Weiterbildung der Erfindung insbesondere Bestandteil des Halbleiterchips sein. Auf diese Art und Weise kann sie kompakt in das Spektrometer implementiert werden und ein integraler Bestandteil des Spektrometers sein.

Insbesondere kann die Elektronikschaltung in vorteilhafter Weise auf der Vorderseite des Halbleiterchips angebracht werden, sodass auch sie nicht zur Abschattung des Detektionsbereichs bei Rückseitenbeleuchtung beiträgt.

Wie bereits oben beschrieben, kann die Elektronikschaltung dazu ausgebildet sein, die inaktivierten Sensorpixel gar nicht erst auszulesen, weil davon ausgegangen wird, dass diese aufgrund möglicher Überlappungen verfälschte Messdaten liefern können. Es kann auch aus Fertigungsgründen einfacher sein, die Gesamtheit der Sensorpixel im Betrieb aktiv zu schalten, diese also detektieren zu lassen, da die genaue Position des Filterarrays zunächst nicht im Allgemeinen bekannt ist und erst später durch Feststellung der Relativkoordinaten des Filterarrays bzw. der Koordinatentransformation zwischen Sensorarray und Filterarray bestimmt wird, während die damit verbundene Zuordnung wiederum lediglich von der Elektronik und/oder einer Software vorgenommen wird.

Bei einem besonders vorteilhaften Ausführungsbeispiel der Erfindung weisen die Filterpixel eine größere Fläche auf als die Sensorpixel. Auf diese Weise können einem Filterpixel mehrere bzw. eine Vielzahl von Sensorpixeln zugeordnet werden, d.h. für die herausgefilterte Wellenlänge steht nicht ein einzelnes Sensorpixel zu Detektion zur Verfügung. Hierdurch werden die Empfindlichkeit und die Genauigkeit des Sensors verbessert. Vorzugsweise ist die Fläche des Filterpixels 16-mal größer als die Fläche eines Sensorpixels. Hier sind jedoch insbesondere Bereiche zwischen etwa dreimal und einer etwa 100 000-mal größeren Fläche denkbar. Zum einen können kleinere Sensorpixel in der Regel schneller arbeiten als große Sensorpixel. Zum anderen ist zu beachten, dass zumindest dann, wenn Sensorarray und Filterarray auf einem Wafer produziert werden sollen, dieser Herstellungsvorgang wegen des implementierten Filterarrays in der Regel sehr teuer ist. Aus diesem Grunde wird es oftmals vorgezogen, das Filterarray separat herzustellen. Gerade in diesem Fall ist es jedoch notwendig, das Filterarray im Verhältnis zum Sensorarray zu justieren, was durch die vorliegende Erfindung und insbesondere gemäß diesem Ausführungsbeispiel entsprechend in besonders guter Weise ermöglicht wird.

In vorteilhafter Weise kann aber wiederum das Filterarray in seiner Gesamtheit eine kleinere Fläche abdecken als das Sensorarray. Auf diese Art und Weise kann sichergestellt werden, dass der gesamte Bereich des Filterarrays von Sensorpixeln bzw. vom Sensorarray erfasst wird, wobei, insbesondere zur Justierung, noch Spielraum besteht, wo genau das Filterarray auf dem Sensorarray angebracht wird. Insbesondere kann am Außenrand des Filterarrays bei dessen Anbringung auf dem Sensorarray noch etwas Platz gelassen werden, dass auch dieser Bereich nicht unmittelbar am Rand des Sensorarrays anliegt, sodass eine hinreichend zuverlässige Detektion der entsprechenden elektromagnetischen Strahlung erfolgen kann.

Das verwendete Filter kann grundsätzlich verschieden ausgebildet sein. Zur Ausbildung eines Fabry-Perot-Interferometers kann jedes Filterpixel zum Beispiel eine Anordnung von parallel zueinander verlaufenden teildurchlässigen Spiegeln aufweisen, welche durch eine transparente Schicht voneinander getrennt sind. Auf diese Art und Weise wird auch ermöglicht, dass das Filterarray unmittelbar nebeneinander liegende Pixel aufweisen kann. In diesem Falle kann das Filterarray zum Beispiel stufenförmig aufgebaut sein, wobei jede Stufe einem oder mehreren Filterpixeln entsprechen kann, d.h. die unterschiedlichen Stufenhöhen repräsentieren einen zusätzlichen Weg, den das Licht bei einer Reflexion zwischen den teildurchlässigen Spiegeln im optischen Medium zurücklegen muss, was zu einem unterschiedlichen Phasenversatz der interferierenden Teilstrahlen zueinander führt, sodass die entsprechenden Stufen auch unterschiedliche Wellenlängen durchlassen.

Auf der Rückseite des Filterarrays oder auch seitlich des Filterarrays kann beispielsweise eine transparente Schutzschicht aufgebracht sein, welche zum einen das Filterarray vor mechanischen Einflüssen schützt. Diese kann insbesondere aus Siliziumnitrid hergestellt werden oder Siliziumnitrid enthalten.

Bei der bevorzugten Weiterbildung der Erfindung kann auch eine Antireflexionsschicht vorgesehen sein, um störende Lichtreflexe vermeiden zu können, welche die Detektion des Spektrometers verfälschen könnten. In der Regel bewirkt eine Antireflexschicht eine destruktive Interferenz, sodass sich die Teilwellen der störenden Reflexe gegenseitig aufheben.

Als transparenter Träger wiederum kann insbesondere eine Glasplatte vorgesehen werden, da dieses Material in vorteilhafter Weise nicht nur die notwendige Transparenz in dem entsprechenden Wellenlängenbereich zwischen 250 nm und 1150 nm aufweisen kann, sondern auch eine gewisse Härte besitzt und deshalb Stabilität verleiht, wobei außerdem der Brechungsindex an die sonstigen im Spektrometer verwendeten Komponenten gut anpassbar ist.

Dementsprechend zeichnet sich ein erfindungsgemäßes Verfahren zur Justierung eines Filterarray in Bezug auf ein Sensorarray für ein Spektrometer oder zur Herstellung eines entsprechenden Spektrometers dadurch aus, dass insbesondere die Koordinaten des Filterarrays in Bezug auf das Sensorarray oder die entsprechende Koordinatentransformation des Filterarray in Bezug auf das Sensorarray ermittelt und in einen nicht-flüchtigen Speicher festgehalten werden, sodass eine Zuordnung der Sensorpixel zu einzelnen Filterpixeln ermöglicht wird. Durch diese Maßnahme sind die bereits oben angeführten Vorteile erzielbar. Insbesondere kann ein derartiges Justierungsverfahren bei der Herstellung eines Spektrometers eingesetzt werden. Gerade dann, wenn Filterarray und Sensorarray als getrennte Komponenten gefertigt werden, die im späteren Herstellungsprozess zusammengefügt werden müssen bzw. in Bezug zueinander zu positionieren sind, ist es notwendig, mit vergleichsweise einfachen Mitteln eine genaue Positionierung zu erreichen, da sonst entweder die Präzision des Sensors darunter leiden oder aber das Spektrometer aufgrund der Fertigung zu teuer würde.

### Ausführungsbeispiel

Ein Ausführungsbeispiel der Erfindung ist in den Zeichnungen dargestellt und wird nachstehend unter Angabe weiterer Einzelheiten und Vorteile näher erläutert. Im Einzelnen zeigen:
- Figur 1:: einen schematischen Schnitt durch ein Spektrometer gemäß der Erfindung,
- Figur 2:: eine schematische Darstellung der Überdeckung von Sensor-und Filterarray, sowie
- Figur 3:: eine weitere schematische Darstellung der Überdeckung von Sensor-und Filterarray.

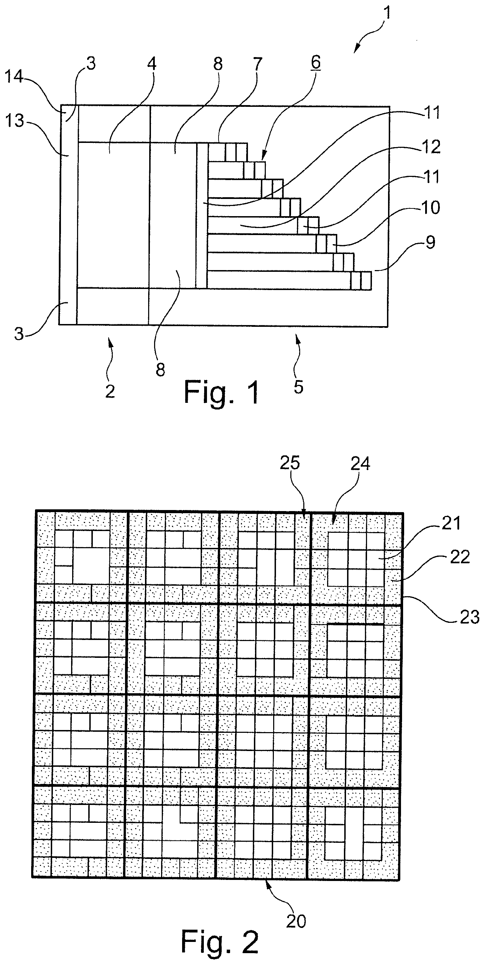

Figur 1 zeigt ein Spektrometer 1 mit einem Halbleiterchip 2, der sich aufteilt in eine Elektronik 3 und ein Sensorarray 4. Die Elektronik 3 wiederum dient unter anderem der Auswertung der vom Sensorarray 4 erhaltenen Signale. Das Sensorarray 4 wird von der Rückseite beleuchtet, weshalb es vorteilhaft ist, die Elektronik 3 auf der Vorderseite anzuordnen, damit es dort nicht zu einer Abschattung des Detektionsbereichs des Sensorarrays 4 kommt. Das auf der Rückseite des Sensorarrays 4 angeordnete Filterarray 5 umfasst als wesentlichen Bestandteil ein bzw. mehrere Fabry-Perot-Interferometer 6 (Abkürzung: FPI), welche die Funktion von Bandpassfiltern übernehmen; dieser Bandpassfilter 6 ist stufenweise angeordnet, wobei jede Stufe 7 einem separaten FPI-Aufbau zur Realisierung eines optischen Bandpassfilters entspricht. Bei bestimmten Wellenlängen treten bei einem FPI Transmissionsmaxima auf, wobei deren Abstand zueinander als freier Spektralbereich bezeichnet wird.

Zudem ist zwischen Sensorarray 4 und Fabry-Pérot-Interferometer 6 eine Glasplatte 8 angeordnet, die als Trägermaterial für das Fabry-Perot-Interferometer 6 dient. Sie stabilisiert den Interferometeraufbau mechanisch.

Für das Sensorarray vier können insbesondere ToF- (Time of flight)-Chips mit zwei Speichern verwendet werden, jeweils für kurze und für lange Belichtung, sodass durch diese Maßnahme auch eine Mittelung, insbesondere auch zu Unterdrückung von Hintergrundlicht vorgenommen werden kann.

Im äußeren Bereich des Filterarrays 5 befindet sich eine Schutzschicht 9 aus Siliziumnitrid, in welche die Kernbestandteile des Filterarrays 5, insbesondere das FPI 6 und auch die Glasplatte 8 gewissermaßen eingebettet sind. Auf einzelnen Filterstufen 7 ist wiederum eine Antireflexschicht 10 angebracht. Die einzelnen Stufen 7 werden von einer transparenten Schicht 12 gebildet, wobei diese wiederum zwischen halbtransparenten Schichten 11 eingebettet ist und wobei die halbtransparenten Schichten 11 jeweils die Spiegel bzw. teildurchlässigen Spiegel des Interferometers bilden.

Figur 2 zeigt ferner eine Matrixanordnung 20 von Sensorpixeln, also ein Sensorarray 20, wobei aktive Sensorpixel 21 und inaktive Sensorpixel 22 dargestellt sind. Die fett gezeichneten Linien, welche jeweils eine Fläche von 5 x 5 Sensorpixeln 21, 22 umgeben, entsprechen jeweils einem Filterpixel 23. Innerhalb jedes Filterpixels 23 wird ein (ein Sensorpixel dicker) Randbereich 24 aus inaktiven Sensorpixeln 22 gebildet. Die Gesamtheit der Ränder 24 aus inaktiven Sensorpixel 22 wiederum bildet eine Lochrasterblende 25. Die Darstellung nach Figur 2 geht von einer exakten Ausrichtung von Filterpixeln 23 und Sensorpixeln 21, 22 aus, wobei jeweils die Ausrichtungen entsprechender Zeilen bzw. Spalten aus Filterpixeln 23 und Sensorpixeln 21, 22 der Arrays parallel verlaufen.

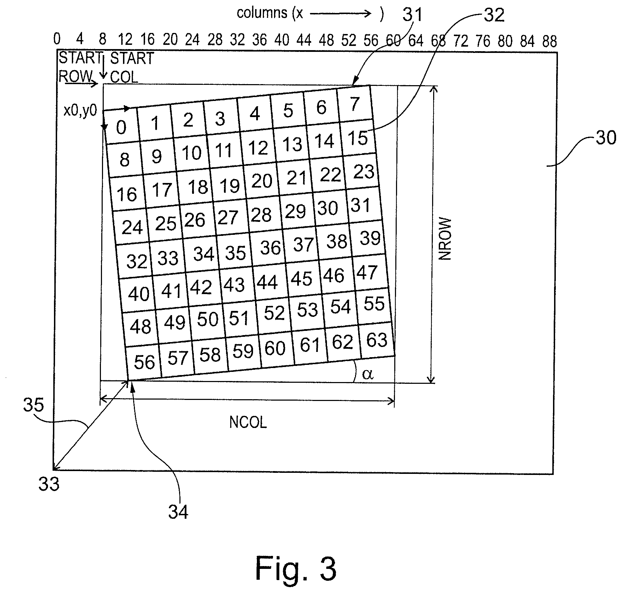

Figur 3 zeigt eine schematische Darstellung eines Sensorarrays 30 und eines Filterarrays 31 mit einzelnen Filterpixeln 32 und verdeutlicht, dass im Allgemeinen der Ursprung 33 des Sensorarrays 30 gegenüber dem Ursprung 34 des Filterarrays 31 um einen Offset 35 versetzt sein kann. Zudem ist das Filterarray 31 gegenüber dem Sensorarray 30 um einen Winkel α verdreht. Die entsprechende Koordinatentransformation kann in einem Speicher hinterlegt werden, der Teil der Einrichtung 13 zur Kennzeichnung der vom Filterarray überdeckten Sensorpixel als Bestandteil der Elektronik 3 ist, wobei der Speicher als nicht-flüchtiger Speicher 14 ausgebildet ist.

Bei sämtlichen Ausführungsbeispielen der Erfindung umfasst das Spektrometer auf seiner Vorderseite einen Halbleiterchip und auf der Rückseite des Halbleiterchips einen Sensorarray, welches zur rückseitigen Beleuchtung ausgebildet ist. Außerdem sind ein Filterarray und eine Einrichtung zur Kennzeichnung der vom Filterarray überdeckten Sensorpixel mit einem nicht flüchtigen Speicher vorgesehen, wobei im Speicher die Koordinaten des Filterarrays relativ zum Sensorarray hinterlegt werden können. Alternativ dazu kann auch eine Koordinatentransformation zur Bestimmung der Positionierung des Filterarrays relativ zum Sensorarray verwendet und im Speicher hinterlegt werden. Diese Maßnahme stellt eine besonders effektive Methode dar, um eine Justierung dieser beiden Komponenten, nämlich des Filterarrays und des Sensorarrays, relativ zueinander vorzunehmen. In der Regel ist es vorteilhaft, wenn die Sensorpixel möglichst klein ausgebildet sind, da größere Sensorpixel in der Regel langsamer arbeiten. Darüber hinaus ist zu beachten, dass die Produktion eines Filterarrays zusammen mit anderen Komponenten auf einem Wafer vergleichsweise teuer ist. Daher wird es in der Fertigung oftmals bevorzugt, das Filterarray separat zu fertigen. In diesem Fall ist jedoch in der Regel eine Justierung zwischen Sensorarray und Filterarray notwendig. Gerade bei Verwendung sehr kleiner Sensorpixel kann eine solche Justierung jedoch extrem aufwendig und teuer sein. Beachtet werden muss ebenfalls, dass das Filterarray gegenüber dem Sensorarray im Allgemeinen nicht über einen reinen Offset bzw. eine einfache Translation verschoben ist, sondern beide Komponenten regelmäßig auch gegeneinander verdreht sind.

### Bezugszeichen:

- 1: Spektrometer
- 2: Halbleiterchip
- 3: Elektronik
- 4: Sensorarray
- 5: Filterarray
- 6: Fabry-Perot-Interferometer
- 7: Filterpixel / Filterstufe
- 8: Glasplatte
- 9: Schutzschicht
- 10: Antireflexschicht
- 11: halbtransparente Schicht
- 12: transparente Schicht
- 13: Einrichtung zur Kennzeichnung der vom Filterarray überdeckten Sensorpixel
- 14: nicht-flüchtiger Speicher
- 20: Sensorarray
- 21: aktive Sensorpixel
- 22: inaktive Sensorpixel
- 23: Filterpixel
- 24: Ränder
- 25: Lochrasterblende
- 30: Sensorarray
- 31: Filterarray
- 32: Filterpixel
- 33: Ursprung des Sensorarrays
- 34: Ursprung des Filterarrays
- 35: Offset
- α: Drehwinkel

## Patentansprüche

1. Spektrometer (1) zur Aufnahme eines Spektrums, insbesondere in einem Wellenlängenbereich von 250 nm bis 1150 nm, umfassend:
- einen auf der Vorderseite des Spektrometers (1) angeordneten Halbleiterchip (2),
- mit einem Sensorarray (4, 20, 30)
o welches auf der Rückseite des Halbleiterchips (2) angeordnet ist,
o welches eine Matrixanordnung von wenigstens zwei Sensorpixeln (21, 22) umfasst,
o wobei die Sensorpixel (21, 22) zur Detektion elektromagnetischer Strahlung ausgebildet sind,
o wobei das Sensorarray (4, 20, 30) zur rückseitigen Beleuchtung ausgebildet ist,
- ein Filterarray (5, 31) zur Filterung der Strahlung in Abhängigkeit von der Wellenlänge,
o wobei das Filterarray (5, 31) eine Matrixanordnung von wenigstens zwei Filterpixeln (7, 23, 32) umfasst,
o wobei jedes Filterpixel (7, 23, 32) zur Filterung ein Fabry-Perot-Interferometer (6) ausbildet,
o und wobei das Filterarray (5, 31) zur Rückseite des Sensorarrays (4, 20, 30) hin angeordnet ist,
eine Einrichtung (13) zur Kennzeichnung der vom Filterarray (5, 31) überdeckten Sensorpixel (21, 22) mit einem nicht-flüchtigen Speicher (14), in welchem die Koordinaten des Filterarrays (5, 31) in Bezug auf das Sensorarray (4, 20, 30) und/oder die Koordinatentransformation des Filterarrays (5, 31) in Bezug auf das Sensorarray (4, 20, 30) hinterlegt sind, um anhand der hinterlegten Koordinaten und/oder Koordinatentransformation die Sensorpixel (21, 22) den einzelnen Filterpixeln (7, 23 ,32) zuzuordnen und/oder um die einzelnen Filterpixel (7, 23 ,32) zu aktivieren, je nachdem, welche der Sensorpixel (21, 22) von den entsprechenden Filterpixeln (7, 23 ,32) überdeckt sind, **dadurch gekennzeichnet, dass** die Einrichtung (13) zur Kennzeichnung der vom Filterarray (5, 31) überdeckten Sensorpixel (21, 22) dazu ausgebildet ist, anhand der hinterlegten Koordinaten und/oder Koordinatentransformation die Sensorpixel (22) zu inaktivieren, welche sich in der Überdeckung jeweils am Rand der einzelnen Filterpixel (7, 23, 32) befinden und um eine Lochrasterblende (25) auszubilden, sodass das gefilterte Licht unterschiedlicher Filterpixel (7, 23, 32) nicht gemeinsam einen der Sensorpixel (21, 22) beeinflusst.

2. Spektrometer (1) nach einem der vorgenannten Ansprüche, **dadurch gekennzeichnet, dass** das Filterarray (5, 31) auf der Rückseite des Sensorarrays (4, 20, 30) angeordnet ist.

3. Spektrometer (1) nach einem der vorgenannten Ansprüche, **dadurch gekennzeichnet, dass** das Filterarray (5, 31) auf einem transparenten Träger (8) aufgebracht ist/sind, wobei der transparente Träger (8) auf der Rückseite des Sensorarrays (4, 20, 30) angeordnet ist.

4. Spektrometer (1) nach Anspruch 3, **dadurch gekennzeichnet, dass** der transparente Träger (8) als Platte, insbesondere als Glasplatte ausgebildet ist.

5. Spektrometer (1) nach einem der vorgenannten Ansprüche, **dadurch gekennzeichnet, dass** die Einrichtung (13) zur Kennzeichnung der vom Filterarray (5, 31) überdeckten Sensorpixel (21, 22) dazu ausgebildet ist, anhand der hinterlegten Koordinaten und/oder Koordinatentransformation die und/oder wenigstens einen der Sensorpixel (21) zu aktivieren, der bzw. die von entsprechenden Filterpixeln (7, 23, 32) überdeckt sind.

6. Spektrometer (1) nach einem der vorgenannten Ansprüche, **dadurch gekennzeichnet, dass** die Einrichtung (13) zur Kennzeichnung der vom Filterarray (5, 31) überdeckten Sensorpixel (21, 22) eine Elektronikschaltung (3) umfasst, welche dazu ausgebildet ist, anhand der hinterlegten Koordinaten und/oder Koordinatentransformation die Sensorpixel (21, 22) zu inaktivieren, welche sich in der Überdeckung jeweils am Rand der Filterpixel (7, 23, 32) befinden, um eine Lochrasterblende (25) auszubilden, sodass das gefilterte Licht unterschiedlicher Filterpixel (7, 23, 32) nicht gemeinsam einen der Sensorpixel (21, 22) beeinflusst.

7. Spektrometer (1) nach Anspruch 6, **dadurch gekennzeichnet, dass** die Elektronikschaltung (3) dazu ausgebildet ist, eine Lochrasterblende (25) mit einem Rand (24) von inaktivierten Sensorpixeln (22) auszubilden, dessen Breite kleiner ist als die Breite und/oder der Durchmesser des unter dem entsprechenden Filterpixel (7, 23, 32) befindlichen Bereichs an nicht inaktivierten Sensorpixeln, wobei der Rand von inaktivierten Sensorpixeln (22) insbesondere die Breite eines Sensorpixels (21, 22) aufweist.

8. Spektrometer (1) nach einem der Ansprüche 6-7, **dadurch gekennzeichnet, dass** die Elektronikschaltung (3) Bestandteil des Halbleiterchips (2) ist.

9. Spektrometer (1) nach einem der Ansprüche 6-8, **dadurch gekennzeichnet, dass** die Elektronikschaltung (3) auf der Vorderseite des Halbleiterchips (2) angebracht ist.

10. Spektrometer (1) nach einem der Ansprüche 6-9, **dadurch gekennzeichnet, dass** die Elektronikschaltung (3) dazu ausgebildet ist, die inaktivierten Sensorpixel (22) nicht auszulesen.

11. Spektrometer (1) nach einem der vorgenannten Ansprüche, **dadurch gekennzeichnet, dass** die Filterpixel (7, 23, 32) eine größere Fläche überdecken als die Sensorpixel (21, 22), insbesondere eine dreimal bis 100000-mal größere Fläche, vorzugsweise eine 16-mal größere Fläche.

12. Spektrometer (1) nach einem der vorgenannten Ansprüche, **dadurch gekennzeichnet, dass** das Filterarray (5, 31) eine kleinere Fläche abdeckt als das Sensorarray (4, 20, 30).

13. Spektrometer (1) nach einem der vorgenannten Ansprüche, **dadurch gekennzeichnet, dass** die Filterpixel (7, 23, 32) eine Anordnung von parallel zueinander angeordneten teildurchlässigen Spiegeln (11) aufweisen, welche durch eine transparente Schicht (12) voneinander getrennt sind.

14. Spektrometer (1) nach einem der vorgenannten Ansprüche, **dadurch gekennzeichnet, dass** bei wenigstens zwei der Filterpixel (7, 23, 32) die teildurchlässigen Spiegel (11) einen unterschiedlichen Abstand zueinander aufweisen, indem die transparenten Schichten (12) jeweils unterschiedliche Dicken besitzen, um der Dicke entsprechend eine unterschiedliche Wellenlängentransmission zu erreichen.

15. Spektrometer (1) nach einem der vorgenannten Ansprüche, **dadurch gekennzeichnet, dass** zumindest auf der Rückseite des Filterarrays (5, 31) eine transparente Schutzschicht (9), insbesondere aus Siliziumnitrid, und/oder eine Antireflexionsschicht (10) angebracht ist.

16. Verfahren zur Justierung eines Filterarrays (5, 31) in Bezug auf ein Sensorarray (4, 20, 30) für ein Spektrometer (1) und/oder zur Herstellung eines Spektrometers (1) zur Aufnahme eines Spektrums, insbesondere in einem Wellenlängenbereich von 250 nm bis 1150 nm, umfassend:
- Anordnung eines Halbleiterchips (2) mit einem Sensorarray (4, 20, 30) auf der Vorderseite des Spektrometers (1), wobei als Sensorarray (4, 20, 30) ein solches verwendet wird:
o das auf der Rückseite des Halbleiterchips (2) angeordnet ist,
o das eine Matrixanordnung von wenigstens zwei Sensorpixeln umfasst,
o das zur rückseitigen Beleuchtung ausgebildet ist,
o wobei die Sensorpixel (21, 22) zur Detektion elektromagnetischer Strahlung ausgebildet sind,
- Anordnung eines Filterarrays (5, 31) zur Filterung der Strahlung in Abhängigkeit von der Wellenlänge auf dem Sensorarray (4, 20, 30), zur Rückseite des Sensorarrays (4, 20, 30) hin, wobei als Filterarray (5, 31) ein solches verwendet wird:
o das eine Matrixanordnung von wenigstens zwei Filterpixeln (7, 23, 32) umfasst,
o wobei jedes Filterpixel (7, 23, 32) zur Filterung ein Fabry-Perot-Interferometer (6) ausbildet,
- Ermittlung der Koordinaten des Filterarrays (5, 31) in Bezug auf das Sensorarray (4, 20, 30) und/oder die Koordinatentransformation des Filterarrays (5, 31) in Bezug auf das Sensorarray (4, 20, 30),
- Bereitstellen eines nicht-flüchtigen Speichers (14) und Hinterlegung der Koordinaten und/oder der Koordinatentransformation im Speicher (14),
- Zuordnen der Sensorpixel (21, 22) zu den einzelnen Filterpixeln (7, 23, 32) und/oder Aktivieren der einzelnen Filterpixel (7, 23, 32), je nachdem, welche der Sensorpixel (21, 22) von den entsprechenden Filterpixeln (7, 23 ,32) überdeckt sind, **dadurch gekennzeichnet, dass** diejenigen Sensorpixel (22) inaktiviert werden, welche von den Filterpixeln (7, 23, 32) überdeckt sich jeweils an deren Rand (24) befinden, um eine Lochrasterblende (25) auszubilden, sodass das gefilterte Licht unterschiedlicher Filterpixel (7, 23, 32) nicht gemeinsam einen der Sensorpixel (21) beeinflusst.

17. Verfahren nach Anspruch 16, **dadurch gekennzeichnet, dass** eine Lochrasterblende (25) mit einem Rand (24) von inaktivierten Sensorpixeln (22) gebildet wird, dessen Breite kleiner ist als die Breite und/oder der Durchmesser des unter dem entsprechenden Filterpixel (7, 23, 32) befindlichen Bereichs an nicht inaktivierten Sensorpixeln (22), wobei der Rand (24) von inaktivierten Sensorpixeln (22) insbesondere so ausgebildet wird, dass er die Breite eines Sensorpixels (21, 22) aufweist.

## Claims

1. A spectrometer (1) for recording a spectrum, in particular in a wavelength range from 250 nm to 1150 nm, comprising:
- a semiconductor chip (2) arranged on the front of the spectrometer (1),
- having a sensor array (4, 20, 30)
o which is arranged on the rear of the semiconductor chip (2),
o which comprises a matrix arrangement of at least two sensor pixels (21, 22),
o wherein the sensor pixels (21, 22) are designed for detecting electromagnetic radiation,
o wherein the sensor array (4, 20, 30) is designed for back lighting,
- a filter array (5, 31) for filtering the radiation depending on the wavelength,
o wherein the filter array (5, 31) comprises a matrix arrangement of at least two filter pixels (7, 23, 32),
o wherein each filter pixel (7, 23, 32) forms a Fabry-Perot interferometer (6) for the purpose of filtering,
o and wherein the filter array (5, 31) is arranged towards the rear of the sensor array (4, 20, 30),
a device (13) for identifying the sensor pixels (21, 22) covered by the filter array (5, 31), having a non-volatile memory (14) in which the coordinates of the filter array (5, 31) in relation to the sensor array (4, 20, 30) and/or the coordinate transformation of the filter array (5, 31) in relation to the sensor array (4, 20, 30) are stored in order to assign the sensor pixels (21, 22) to the individual filter pixels (7, 23, 32) based on the stored coordinates and/or coordinate transformation and/or to activate the individual filter pixels (7, 23, 32), depending on which of the sensor pixels (21, 22) are covered by the corresponding filter pixels (7, 23, 32), **characterised in that** the device (13) for identifying the sensor pixels (21, 22) covered by the filter array (5, 31) is designed to deactivate the sensor pixels (22) which are in the coverage at the respective edges of the individual filter pixels (7, 23, 32), based on the stored coordinates and/or coordinate transformation, and to form a perforated grid diaphragm (25) so that the filtered light from different filter pixels (7, 23, 32) does not jointly influence one of the sensor pixels (21, 22).

2. The spectrometer (1) according to any one of the preceding claims, **characterised in that** the filter array (5, 31) is arranged on the rear of the sensor array (4, 20, 30).

3. The spectrometer (1) according to any one of the preceding claims, **characterised in that** the filter array(s) (5, 31) is/are applied to a transparent support (8), wherein the transparent support (8) is arranged on the rear of the sensor array (4, 20, 30).

4. The spectrometer (1) according to claim 3, **characterised in that** the transparent support (8) is designed as a plate, in particular as a glass plate.

5. The spectrometer (1) according to any one of the preceding claims, **characterised in that** the device (13) for identifying the sensor pixels (21, 22) covered by the filter array (5, 31) is designed to activate the and/or at least one of the sensor pixels (21) covered by corresponding filter pixels (7, 23, 32), based on the stored coordinates and/or coordinate transformation.

6. The spectrometer (1) according to any one of the preceding claims, **characterised in that** the device (13) for identifying the sensor pixels (21, 22) covered by the filter array (5, 31) comprises an electronic circuit (3) which is designed to deactivate the sensor pixels (21, 22) which are in the coverage at the respective edges of the filter pixels (7, 23, 32), based the stored coordinates and/or coordinate transformation, in order to form a perforated grid diaphragm (25) so that the filtered light from different filter pixels (7, 23, 32) does not jointly influence one of the sensor pixels (21, 22).

7. The spectrometer (1) according to claim 6, **characterised in that** the electronic circuit (3) is designed to form a perforated grid diaphragm (25) having an edge (24) of deactivated sensor pixels (22), the width of which is smaller than the width and/or the diameter of the area of non-deactivated sensor pixels below the corresponding filter pixels (7, 23, 32), wherein the edge of deactivated sensor pixels (22) has, in particular, the width of a sensor pixel (21, 22).

8. The spectrometer (1) according to any one of claims 6 to 7, **characterised in that** the electronic circuit (3) is part of the semiconductor chip (2).

9. The spectrometer (1) according to any one of claims 6 to 8, **characterised in that** the electronic circuit (3) is attached to the front of the semiconductor chip (2).

10. The spectrometer (1) according to any one of claims 6 to 9, **characterised in that** the electronic circuit (3) is designed not to read out the deactivated sensor pixels (22).

11. The spectrometer (1) according to any one of the preceding claims, **characterised in that** the filter pixels (7, 23, 32) cover a larger area than the sensor pixels (21, 22), in particular an area that is three to 100,000 times larger, preferably an area that is 16 times larger.

12. The spectrometer (1) according to any one of the preceding claims, **characterised in that** the filter array (5, 31) covers a smaller area than the sensor array (4, 20, 30).

13. The spectrometer (1) according to any one of the preceding claims, **characterised in that** the filter pixels (7, 23, 32) have an arrangement of partially transparent mirrors (11) arranged parallel to one another, which are separated from one another by a transparent layer (12).

14. The spectrometer (1) according to any one of the preceding claims, **characterised in that** in at least two of the filter pixels (7, 23, 32) the partially transparent mirrors (11) are at a different distance from one another by the transparent layers (12) each having different thicknesses in order to achieve a different wavelength transmission corresponding to the thickness.

15. The spectrometer (1) according to any one of the preceding claims, **characterised in that** a transparent protective layer (9), in particular made of silicon nitride, and/or an anti-reflective layer (10) is applied at least on the rear of the filter array (5, 31).

16. A method for adjusting a filter array (5, 31) in relation to a sensor array (4, 20, 30) for a spectrometer (1) and/or for producing a spectrometer (1) for recording a spectrum, in particular in a wavelength range from 250 nm to 1150 nm, comprising:
- arranging a semiconductor chip (2) having a sensor array (4, 20, 30) on the front of the spectrometer (1), wherein the sensor array (4, 20, 30) used is one:
o which is arranged on the rear of the semiconductor chip (2),
o which comprises a matrix arrangement of at least two sensor pixels,
o which is designed for back lighting,
o wherein the sensor pixels (21, 22) are designed for detecting electromagnetic radiation,
- arranging on the sensor array (4, 20, 30) a filter array (5, 31) for filtering the radiation depending on the wavelength, towards the rear of the sensor array (4, 20, 30), wherein the filter array (5, 31) used is one:
o which comprises a matrix arrangement of at least two filter pixels (7, 23, 32),
o wherein each filter pixel (7, 23, 32) forms a Fabry-Perot interferometer (6) for the purpose of filtering,
- determining the coordinates of the filter array (5, 31) in relation to the sensor array (4, 20, 30) and/or the coordinate transformation of the filter array (5, 31) in relation to the sensor array (4, 20, 30),
- providing a non-volatile memory (14) and storing the coordinates and/or the coordinate transformation in the memory (14),
- assigning the sensor pixels (21, 22) to the individual filter pixels (7, 23, 32) and/or activating the individual filter pixels (7, 23, 32), depending on which of the sensor pixels (21, 22) are covered by the corresponding filter pixels (7, 23, 32), **characterised in that** the sensor pixels (22) deactivated are those covered by the filter pixels (7, 23, 32) and are located at the edge (24) thereof in order to form a perforated grid diaphragm (25) so that the filtered light from different filter pixels (7, 23, 32) does not jointly influence one of the sensor pixels (21).

17. The method according to claim 16, **characterised in that** a perforated grid diaphragm (25) is formed with an edge (24) of deactivated sensor pixels (22), the width of which is smaller than the width and/or the diameter of the area of non-deactivated sensor pixels (22) below the corresponding filter pixels (7, 23, 32), wherein the edge (24) of deactivated sensor pixels (22) is designed, in particular, such that it has the width of a sensor pixel (21, 22).

## Revendications

1. Spectromètre (1) pour enregistrer un spectre, en particulier dans une gamme de longueurs d'onde de 250 nm à 1150 nm, comprenant :
- une puce semi-conductrice (2) disposée sur le côté avant du spectromètre (1),
- avec un réseau de capteurs (4, 20, 30)
o qui est disposé sur le côté arrière de la puce semi-conductrice (2),
o qui comprend une disposition matricielle d'au moins deux pixels de capteur (21, 22),
o les pixels de capteur (21, 22) étant conçus pour la détection de rayonnement électromagnétique,
o le réseau de capteurs (4, 20, 30) étant conçu pour un rétro-éclairage,
- un réseau de filtres (5, 31) pour filtrer le rayonnement en fonction de la longueur d'onde,
o le réseau de filtres (5, 31) comprenant une disposition matricielle d'au moins deux pixels de filtre (7, 23, 32),
o dans lequel chaque pixel de filtre (7, 23, 32) forme un interféromètre Fabry-Perot (6) pour filtrer,
o et dans lequel le réseau de filtres (5, 31) est disposé vers le côté arrière du réseau de capteurs (4, 20, 30),
un dispositif (13) pour identifier les pixels de capteur (21, 22) couverts par le réseau de filtres (5, 31) avec une mémoire non volatile (14) dans laquelle les coordonnées du réseau de filtres (5, 31) par rapport au réseau de capteurs (4, 20, 30) et/ou la transformation de coordonnées du réseau de filtres (5, 31) par rapport au réseau de capteurs (4, 20, 30) sont stockées afin d'utiliser les coordonnées stockées et/ou la transformation de coordonnées stockée pour associer les pixels de capteur (21, 22) aux pixels de filtre individuels (7, 23, 32) et/ou pour activer les pixels de filtre individuels (7, 23, 32), selon lesquels des pixels de capteur (21, 22) sont couverts par les pixels de filtre correspondants (7, 23, 32), **caractérisé en ce que** le dispositif (13) pour identifier les pixels de capteur (21, 22) couverts par le réseau de filtres (5, 31) est conçu pour utiliser les coordonnées stockées et/ou la transformation de coordonnées stockée pour inactiver les pixels de capteur (22), qui se trouvent respectivement sur le bord du pixel de filtre (7, 23, 32) individuel lors de la couverture et pour former une plaque de masquage perforée (25), de sorte que la lumière filtrée provenant de différents pixels de filtre (7, 23, 32) n'influence pas conjointement l'un des pixels de capteur (21, 22).

2. Spectromètre (1) selon l'une quelconque des revendications précédentes, **caractérisé en ce que** le réseau de filtres (5, 31) est disposé sur le côté arrière du réseau de capteurs (4, 20, 30).

3. Spectromètre (1) selon l'une quelconque des revendications précédentes, **caractérisé en ce que** le réseau de filtres (5, 31) est/sont appliqués sur un support transparent (8), le support transparent (8) étant agencé sur le côté arrière du réseau de capteurs (4, 20, 30).

4. Spectromètre (1) selon la revendication 3, **caractérisé en ce que** le support transparent (8) est réalisé sous forme de plaque, notamment de plaque de verre.

5. Spectromètre (1) selon l'une quelconque des revendications précédentes, **caractérisé en ce que** le dispositif (13) pour identifier les pixels de capteur (21, 22) couverts par le réseau de filtres (5, 31) est conçu pour utiliser les coordonnées stockées et/ou la transformation de coordonnées stockée pour activer les et/ou au moins un des pixels de capteur (21), qui sont couverts par des pixels de filtre correspondants (7, 23, 32).

6. Spectromètre (1) selon l'une quelconque des revendications précédentes, **caractérisé en ce que** le dispositif (13) d'identification des pixels de capteur (21, 22) couverts par le réseau de filtres (5, 31) comprend un circuit électronique (3) conçu pour utiliser les coordonnées stockées et/ou la transformation de coordonnées stockée pour inactiver les pixels de capteur (21, 22), qui se trouvent respectivement sur le bord des pixels de filtre (7, 23, 32) lors de la couverture, afin de former une plaque de masquage perforée (25) de sorte que la lumière filtrée des différents pixels de filtre (7, 23, 32) n'influence pas conjointement l'un des pixels de capteur (21, 22).

7. Spectromètre (1) selon la revendication 6, **caractérisé en ce que** le circuit électronique (3) est conçu pour former une plaque de masquage perforée (25) avec un bord (24) de pixels de capteur inactivés (22), dont la largeur est inférieure à la largeur et/ou au diamètre de la zone de pixels de capteur non inactivés, située sous le pixel de filtre (7, 23, 32) correspondant, le bord des pixels de capteur (22) inactivés ayant notamment la largeur d'un pixel de capteur (21, 22).

8. Spectromètre (1) selon l'une quelconque des revendications 6 et 7, **caractérisé en ce que** le circuit électronique (3) fait partie de la puce semi-conductrice (2).

9. Spectromètre (1) selon l'une quelconque des revendications 6 à 8, **caractérisé en ce que** le circuit électronique (3) est fixé sur le côté avant de la puce semi-conductrice (2).

10. Spectromètre (1) selon l'une quelconque des revendications 6 à 9, **caractérisé en ce que** le circuit électronique (3) est conçu pour ne pas lire les pixels de capteur (22) inactivés.

11. Spectromètre (1) selon l'une quelconque des revendications précédentes, **caractérisé en ce que** les pixels de filtre (7, 23, 32) couvrent une surface plus grande que les pixels de capteur (21, 22), en particulier une surface trois à 100 000 fois plus grande, de préférence une surface 16 fois plus grande.

12. Spectromètre (1) selon l'une quelconque des revendications précédentes, **caractérisé en ce que** le réseau de filtres (5, 31) couvre une surface plus petite que le réseau de capteurs (4, 20, 30).

13. Spectromètre (1) selon l'une quelconque des revendications précédentes, **caractérisé en ce que** les pixels de filtre (7, 23, 32) ont une disposition de miroirs partiellement transparents (11) disposés parallèlement les uns aux autres, qui sont séparés les uns des autres par une couche transparente (12).

14. Spectromètre (1) selon l'une quelconque des revendications précédentes, **caractérisé en ce que** dans au moins deux des pixels de filtre (7, 23, 32), les miroirs partiellement transparents (11) sont à une distance différente les uns des autres par le fait que les couches transparentes (12) ont chacune des épaisseurs différentes, pour obtenir une transmission de longueur d'onde différente en fonction de l'épaisseur.

15. Spectromètre (1) selon l'une quelconque des revendications précédentes, **caractérisé en ce qu'**au moins sur le côté arrière du réseau de filtres (5, 31), une couche de protection transparente (9), notamment en nitrure de silicium et/ou une couche antireflet (10) est appliquée.

16. Procédé pour régler un réseau de filtres (5, 31) par rapport à un réseau de capteurs (4, 20, 30) pour un spectromètre (1) et/ou pour produire un spectromètre (1) pour enregistrer un spectre, en particulier dans une gamme de longueurs d'onde de 250 nm jusqu'à 1150 nm, comprenant :
- l'agencement d'une puce semi-conductrice (2) avec un réseau de capteurs (4, 20, 30) sur le côté avant du spectromètre (1), le réseau de capteurs (4, 20, 30) utilisé étant tel que :
o il est disposé sur le côté arrière de la puce semi-conductrice (2),
o il comprend un arrangement matriciel d'au moins deux pixels de capteur,
o il est conçu pour le rétro-éclairage,
o les pixels de capteur (21, 22) étant conçus pour la détection de rayonnement électromagnétique,
- l'agencement d'un réseau de filtres (5, 31) pour filtrer le rayonnement en fonction de la longueur d'onde sur le réseau de capteurs (4, 20, 30), vers le côté arrière du réseau de capteurs (4, 20, 30), le réseau de filtres (5, 31) utilisé étant tel que :
o il comprend une disposition matricielle d'au moins deux pixels de filtre (7, 23, 32),
o dans lequel chaque pixel de filtre (7, 23, 32) forme un interféromètre Fabry-Perot (6) pour filtrer,
- la détermination des coordonnées du réseau de filtres (5, 31) par rapport au réseau de capteurs (4, 20, 30) et/ou de la transformation de coordonnées du réseau de filtres (5, 31) par rapport au réseau de capteurs (4, 20, 30),
- la fourniture d'une mémoire non volatile (14) et le stockage des coordonnées et/ou de la transformation de coordonnées dans la mémoire (14),
- l'attribution des pixels de capteur (21, 22) aux pixels de filtre individuels (7, 23, 32) et/ou l'activation des pixels de filtre individuels (7, 23, 32), selon lequel des pixels de capteur (21, 22) sont couverts par les pixels de filtre (7, 23, 32) correspondants, **caractérisé en ce que** chaque pixel de capteur (22) qui est couvert par les pixels de filtre (7, 23, 32) se trouvant sur leur bord (24), sont inactivés afin de former une plaque de masquage perforée (25), de sorte que la lumière filtrée provenant de différents pixels de filtre (7, 23, 32) n'influence pas conjointement l'un des pixels de capteur (21).

17. Procédé selon la revendication 16, **caractérisé en ce qu'**une plaque de masquage perforée (25) avec un bord (24) de pixels de capteur inactivés (22) est formée, dont la largeur est inférieure à la largeur et/ou au diamètre de la zone sur le pixel capteur (22) non inactivé, située sous le pixel de filtre (7, 23, 32) correspondant, le bord (24) des pixels de capteur inactivés (22) étant conçu notamment de manière à avoir la largeur d'un pixel de capteur (21, 22).
